# EUROPÄISCHE PATENTSCHRIFT

(11) **EP 0 478 737 B1**
(45) Veröffentlichungstag und Bekanntmachung des Hinweises auf die Patenterteilung: **27.07.1994**
(21) Anmeldenummer: 91907383.3
(22) Anmeldetag: 12.04.1991
(51) Int. Cl.: G01P 15/09

(54) **VORRICHTUNG ZUR BESCHLEUNIGUNGSMESSUNG DURCH PIEZOELEKTRISCHE UMFORMER**
DEVICE FOR MEASURING ACCELERATION VIA PIEZOELECTRIC TRANSDUCERS
DISPOSITIF DE MESURE DE L'ACCELERATION AU MOYEN DE TRANSDUCTEURS PIEZOELECTRIQUES

(30) Priorität: 12.04.1990 DE 4011910
(43) Veröffentlichungstag der Anmeldung: 08.04.1992
(73) Patentinhaber: PRÜFTECHNIK DIETER BUSCH AG, 85737 Ismaning (DE)
(72) Erfinder: LYSEN, Heinrich, D-8000 München 40 (DE)
(74) Vertreter: Hieke, Kurt
(86) Internationale Anmeldenummer: EP9100709
(87) Internationale Veröffentlichungsnummer: WO9116636

(56) Entgegenhaltungen:
- DE-A- 3 817 354
- FR-A- 1 197 092
- FR-A- 2 117 846

## Beschreibung

Die Erfindung bezieht sich auf eine Vorrichtung gemäß dem einleitenden Teil des Patentanspruchs 1.

Vorrichtungen dieser Gattung sind aus der EP-A1-0316498 und aus der DE-A1-3038660 bekannt.

Die Vorrichtung nach der EP-A1-0316498 weist als Träger einen gleichzeitig als Montagebasis dienenden massiven zylindrischen Körper mit zueinander parallelen Stirnflächen auf, durch den senkrecht zu den Stirnflächen koaxial zur Zylinderachse ein Bolzen hindurchgeführt ist, so daß er aus der einen Stirnfläche des Trägers senkrecht herausragt. Im Abstand von dem Träger durchsetzt der Bolzen koaxial eine zylindrische seismische Masse, die ebenfalls zur Zylinderachse senkrechte Stirnflächen aufweist. Zwischen dem Träger und der seismischen Masse ist mittels des als Spannstift wirkenden Bolzens ein piezoelektrischer Wandler eingespannt, der den Bolzen ebenfalls koaxial umgibt. Der Bolzen ist schlank und elastisch und hat in dem Wandler erhebliches Spiel. Unter Massenträgheitskräften, die die seismische Masse quer zur Achse des Bolzens beaufschlagen, treten Biegebeanspruchungen auf, welche im Wandler auf einer Seite des Bolzens eine Druckerhöhung und auf der anderen Seite eine Druckabnahme bewirken. Der Wandler ist mit unterteilten Elektroden versehen, die den im Gegentakt auftretenden Druckbeanspruchungen entsprechend im Gegentakt angeordnet und geschaltet sind, so daß sich die Ladungsänderungen in den gegentaktig angeordneten Elektroden bei Biegebeanspruchungen addieren, die pyroelektrischen Effekte aus einem Wärmefluß zwischen dem Träger und der seismischen Masse durch den Wandler hindurch sich hingegen kompensieren.

Vorrichtungen zum Messen der Beschleunigung sollen in der Regel nur hinsichtlich einer bestimmten Beschleunigungsart (translatorische Beschleunigung, Winkelbeschleunigung) und Beschleunigungsachse, der Hauptachse, sensitiv sein. Dies ist bei dcr bekannten Vorrichtung jedoch nicht ausreichend der Fall. Die bekannte Vorrichtung ist ein sogenannter Querbeschleunigungsaufnehmer, der nur auf Beschleunigungen senkrecht zur Achse des Bolzens ansprechen sollte. Wegen der funktionsnotwendigen Kippfreiheit der seismischen Masse gehen als unerwünschter Nebeneffekt aber auch Winkelbeschleunigungen und lineare Beschleunigungen senkrecht zur Hauptachse in das Meßergebnis so stark mit ein, daß die Vorrichtung trotz der Kompensation der pyroelektrischen Effekte nicht als exakter Beschleunigungsmesser sondern praktisch nur als Fühler einsetzbar ist.

Die bekannte Vorrichtung gemäß DE-A1 30 38 660 weist einen Träger sowie eine aus einem Stück bestehende seismische Masse auf, die so mit dem Träger verbunden ist, daß sie um eine langgestreckte Biegelinie diesem gegenüber verschwenkbar ist. Der Schwerpunkt der seismischen Masse und die Biegelinie bestimmen eine Ebene. Senkrecht zu dieser Ebene sowie parallel zur Biegelinie ist an der seismischen Masse ein piezoelektrisches Plättchen angeordnet, das an seinen von der Ebene entfernten Enden mit der piezoelektrischen Masse und in der Mitte dazwischen auf der Höhe der Ebene mit dem Träger fest verbunden ist. Das Plättchen ist oberhalb und unterhalb des zum Biegelager parallelen mittigen Befestigungsbereichs parallel zur Ebene sowie senkrecht zu seinen Breitseiten in entgegengesetzten Richtungen polarisiert und mit gesonderten Elektroden belegt. Eine dritte Elektrode erstreckt sich auf der anderen Seite des Plättchens zwischen den endseitigen Befestigungsbereichen. Durch senkrecht zur Ebene wirkende Beschleunigungen wird das Plättchen auf der einen Seite der Ebene gestaucht und auf der anderen Seite gedehnt, also auf Scherung beansprucht. Die Elektroden sind so zusammengeschaltet, daß sich die piezoelektrischen Effekte addieren, die pyroelektrischen Effekte, die durch einen Wärmefluß von der Befestigungsstelle am Träger durch das Plättchen hindurch zu den Befestigungsstellen an der seismischen Masse zustande kommen, sich hingegen kompensieren.

Die bei der vorgenannten bekannten Vorrichtung vorliegende Querkompressionsanregung (k₃₁) hat den Nachteil einer sehr geringen mechanischen Stabilität. Das Piezoplättchen kann leicht brechen und ist nicht großflächig eingespannt. Die bekannte Vorrichtung soll bestimmungsgemäß Beschleunigungen senkrecht zu der oben erwähnten Ebene messen, ist aber eigentlich ein Winkelaufnehmer um die Achse des Biegelagers und damit auch in einem nicht unerheblichen Maße empfindlich für Beschleunigungen quer zur gewollten Meßachse.

Des weiteren ist aus der DE-OS 30 29 847 ein piezoelektrischer Beschleunigungsaufnehmer mit Kompressionsanregung bekannt, der einen auf einer Basis zur Befestigung auf dem Prüfling angeordneten zylinderförmigen Träger, eine axial auf den Träger aufgesteckte seismische Masse und ein scheibenförmiges Piezoelement aufweist, das unter einer mechanischen Vorpsannung steht. Die in Richtung der zu messenden Beschleunigung durch Kompression angeregte piezoelektrische Scheibe steht durch eine am axialen Trägerende angebrachte Anordnung aus Niet, elastischem Element und seismischer Masse unter Vorspannung. Dieser bekannte Beschleunigungsaufnehmer ist gegenüber äußeren Temperatureinflüssen empfindlich. Das Piezoelement liegt - abgesehen von dazwischen angeordneten Elektroden und Isolierelementen - unmittelbar auf der Basis auf, so daß bei einem Temperaturunterschied zwischen Basis und seismischer Masse ein Wärmefluß durch das Piezoelement vorhanden ist. Der Wärmefluß bewirkt am Piezoelement - ähnlich wie bei einer Kompression oder Scherung - eine Ladungstrennung, also einen pyroelektrischen Effekt. Vorzeichen und Umfang des pyroelektrischen Effekts hängen von der Polarisation des betreffenden Piezoelements ab, also davon, ob der Wärmefluß in oder entgegen der Richtung der Polarisation stattfindet. Temperaturgradienten und Wärmeflüsse zwischen Basis und seismischer Masse sind bei vielen Messungen praktisch unvermeidbar und verfälschen bei der bekannten Vorrichtung aufgrund der beträchtlichen pyroelektrisch bedingten Ladungsverschiebungen am Piezoelement die Meßergebnisse. Die Verbindung des Piezoelements direkt mit der Basis ist auch insofern nachteilig, als sich eine Verformung der Basis - wie sie z.B. durch mechanische Beanspruchung oder durch Temperaturverformung auftreten kann, unmittelbar auf das Piezoelement - dessen piezoelektrischen Effekt beeinflussend - selbst auswirkt, so daß der bekannte Beschleunigungsaufnehmer auch eine geringe Bodendehnungsunempfindlichkeit besitzt. Dies gilt auch für die oben besprochene bekannte Vorrichtung gemäß EP-A1-0316498. Beschleunigungsaufnehmer sollten aber eine große Bodendehnungsunempfindlichkeit haben.

Ein weiterer bekannter, in der DE-OS 30 19 551 erläuterter piezoelektrischer Beschleunigungsfühler weist einen auf einer Basis stehenden Träger auf, der zur Verbesserung der Temperaturbeständigkeit im wesentlichen den gleichen Wärmeausdehnungskoeefizienten besitzt wie die dort in Scheranregung beaufschlagten Piezoelemente. Derartige Beschleunigungsfühler sind zwar gegenüber Temperaturdifferenzen wenig empfindlich, sie haben aber, ebenso wie der bekannte, oben besprochene Beschleunigungsaufnehmer gemäß DE-A1-30 38 660, eine nur geringe mechanische Stabilität. Die seismischen Massen entwickeln bei Beschleunigungsaufnehmern mit Scheranregung naturgemäß große Flieh- und Scherkräfte und beschädigen daher ihre Befestigung am Träger bzw. den Träger selbst. Beschleunigungsaufnehmer mit Scheranregung sind auch zur Messung hochfrequenter Schwingungnen ungeeignet, da die Trägeranordnung und die daran angekoppelten seismischen Massen leicht in Resonanz geraten bzw. Eigenschwingungen entwickeln.

Der Erfindung liegt die Aufgabe zugrunde, eine Vorrichtung gemäß dem einleitenden Teil des Patentanspruchs 1 zu schaffen, die neben der Temperaturunempfindlichkeit auch eine hohe mechanische Stabilität und eine sehr große Unempfindlichkeit gegen Bodendehnung, d.h. gegen Dehnung der an dem Prüfling zu befestigenden Montagebasis, und insbesondere auch gegen jegliche Beschleunigungen anderer Art und Richtung als linear sowie parallel zur Hauptachse des Trägers aufweist, so daß sie als Meßvorrichtung von hoher Meßgenauigkeit zum Messen von Längsbeschleunigungen einsetzbar ist.

Die vorgenannte Aufgabe wird durch die Merkmale des Patentanspruchs 1 gelöst.

Die Vorteile der erfindungsgemäßen Vorrichtung gegenüber dem oben geschilderten Stand der Technik insgesamt liegen erstens in einem temperaturneutralen Verhalten, da sich die an den Piezoelementen wärmeflußbedingt auftretenden Spannungen bzw. Ladungsverschiebungen gegenseitig aufheben. Temperaturbedingte Spannungs- bzw. Ladungsverschiebungen werden durch die paarweise Anordnung der Piezoelemente auf der Oberseite und der Unterseite des Querstücks des Trägers ausgeglichen, so daß nur beschleunigungsbedingte piezoelektrische Meßwerte verbleiben. Hinzu kommt zweitens, daß die vorgesehene Anordnung der Piezoelementen in Kompressionsanregung eine viel größere mechanische Stabilität und Festigkeit besitzt als eine Anordnung in Scheranregung, da am Träger bzw. an der Befestigung der Piezoelemente am Träger keine Scherkräfte auftreten und die Piezoelemente nicht bruchgefährdet sind. Drittens verhält sich der piezoelektrische Umformer auch gegenüber mechanischen oder temperaturbedingten Verformungen der Basis für den Träger neutral, da die Piezoelemente nicht mit der Basis sondern im Abstand von dieser mit dem Träger verbunden sind. Der Träger kann mit seinem Querstück problemlos sehr massiv ausgeführt werden. Ebenso wie die pyroelektrischen Effekte kompensieren sich auch piezoelektrische Störeffekte, die von Beschleunigungen anderer Art und Richtung als derjenigen herrühren, die gemessen werden soll und hier die lineare Beschleunigung parallel zur Hauptachse des Trägers ist, oder es kommen solche Störeffekte erst gar nicht zustande.

Die Unteransprüche haben bevorzugte Ausführungsformen der Vorrichtung gemäß Patentanspruch 1 zum Gegenstand.

Bei einer bevorzugten Ausführungsform der Vorrichtung besitzen die an den beiden Piezoelementen eines Paars angekoppelten Teile der seismischen Masse im wesentlichen die gleiche Wärmekapazität und/oder die gleiche spezifische Wärmekapazität und/oder die gleiche Wärmeleitfähigkeit.

Vorzugsweise werden die an den beiden Piezoelementen eines Paars angekoppelten Teile der seismischen Masse wärme-und/-oder elektrisch leitend miteinander verbunden. Wenn gleichzeitig die Teile der seismischen Masse mit den Piezoelementen nicht nur mechanisch sondern auch elektrisch leitend verbunden werden, kompensieren sich die bei einem Wärmefluß durch die Piezoelemente auftretenden pyroelektrischen Effekte über die elektrisch leitenden Teile der Masse, d.h. sie werden "kurzgeschlossen". Die Kompensation des pyroelektrischen Effekts an den Piezoelementen kann aber auch mit Hilfe einer geeigneten elektrischen Verbindung der Piezoelemente oder einer elektronischen Schaltung erfolgen.

Die an den Piezoelementen eines Paars angekoppelten Teile der seismischen Masse können in einem integralen Körper zusammengefaßt sein oder zwei oder mehrere einzelne Körper bilden. Dabei sind seismische Einzelmassen bevorzugt, die sowohl mit den Piezoelementen als auch untereinander wärmeleitend verbunden sind, so daß zwischen den Teilen der seismischen Masse keine Temperaturunterschiede vorhanden sind. Die seismische Masse bestehen daher vorteilhafterweise aus gut wärmeleitendem Material. wie Messing, Silber, Kuper, Gold, Blei, Aluminium, Stahl, etc..

Bei Beschleunigungsmessern besteht im allgemeinen zwischen der Basis und der seismischen Masse ein Temperaturgradient, da die Grundfläche gegenüber dem häufig sehr heißen Prüfling nicht ausreichend wärmeisoliert werden kann. In so einem Fall erfolgt ein Wärmefluß von der Basis über die Trägereinrichtung durch die Piezoelemente auf die seismische Masse. Es ist daher vorteilhaft, die Polarisation der beiden Piezoelemente des Paars bezüglich des Trägers so auszurichten, daß bei den Piezoelementen der Wärmefluß einmal in und einmal entgegen der Polarisationsrichtung erfolgt. Besonders voteilhaft ist es, wenn die pyroelektrischen Effekte an den beiden Piezoelementen gleich groß sind, so daß sie sich durch Kurzschließen über die angekoppelte elektrisch und wärmeleitende seismische Masse gänzlich aufheben.

Der Träger für die Piezoelemente ist vorteilhafterweise T-förmig oder pilzförmig, wobei in jedem Falle von den beiden Piezoelementen eines jeden Paares eines auf der Oberseite und das andere auf der Unterseite des dadurch gebildeten Querstücks angeordnet ist. Das Querstück ist auch hierbei senkrecht zur Beschleunigungsrichtung orientiert, so daß auch die einzelnen Piezoelemente bzw. deren Polarisation - bezüglich der Beschleunigungsrichtung gleich orientiert sind. Die Unterfläche des oberen Piezoelements ist vorteilhafterweise mit der Oberfläche des unteren Piezoelements durch den Querträger elektrisch leitend verbunden, so daß die bei einer Beschleunigung auftretenden piezoelektrischen Effekte sich addieren.

Der sich in Richtung der Hauptachse erstreckende Teil des Trägers kann einen zur Basis hin breiter werdenden Fuß besitzen und/oder kegelförmig sein. Günstig ist auch ein Träger aus einem schlecht wärmeleitenden Material, wie einem keramischen Material. Wenn der Träger gleichzeitig auch ein elektrischer Leiter sein soll, dann ist hingegen VA-Stahl zu bevorzugen.

Die Anordnung aus dem T- oder pilz-förmigen Träger, den Piezoelementen und der seismischen Masse in Bezug aufeinander kann im wesentlichen punktsymmetrisch und/oder spiegelsymmetrisch sein. Bevorzugt sind auch scheibenförmige Piezoelemente, die aus einem piezokeramischen Material bestehen,

Die erfindungsgemäße Vorrichtung kann ferner zwischen Träger und Piezoelement und/oder seismischer Masse und Piezoelement elektrisch isolierende Schichten, insbesondere Isolierscheiben, sowie Elektroden zum Abgreifen der Spannungen bzw. der Ladungen besitzen.

Vorteilhafterweise werden die pyroelektrischen Effekte gleich an den Piezoelementen des Paares über die elektrisch leitende seismische Masse kurzgeschlossen, so daß sich diese in günstigen Fällen vollkommen gegenseitig aufheben.

Die bei einer Beschleunigung durch die seismische Masse hervorgerufenen entgegengesetzten piezoelektrischen Effekte werden hingegen bevorzugt durch einen elektrisch leitenden Träger miteinander verbunden, so daß sie sich addieren bzw. verstärken. Die wegen der erfindungsgemäßen Anordnung ca. verdoppelte Spannungs- bzw. Ladungsdifferenz beim piezoelektrischen Effekt kann direkt durch Anschlußfahnen an den Elementen und/oder Kontakte an der elektrisch leitenden seismischen Masse, bzw. damit verbundenen elektrisch leitenden Teilen, und an dem elektrisch leitenden Träger, bzw. damit verbundenen elektrisch leitenden Teilen, abgegriffen werden.

Die erfindungsgemäße Vorrichtung ist insbesondere auch zum Messen von Schwingungen geeignet. Dabei ist es besonders vorteilhaft, wenn bei hochfrequenten Schwingungen zwischen 10-50 kHz die abgegriffenen Spannungs- und Ladungswerte vor einer elektronischen Verstärkung so gefiltert werden, daß sich die Temperaturabhängigkeit der gesamten Meßvorrichtung ausgleicht. Die erfindungsgemäße Vorrichtung soll für einen Temperaturbereich von -50°C bis +150°C geeignet sein.

Die erfindungsgemäße Vorrichtung ist insbesondere auch zum Messen von Schwingungen bzw. von Beschleunigungen und Erschütterungen geeignet, wie sie beispielsweise im Erdreich, an Hoch- und Tiefbaukonstruktionen, an Maschinen, insbesondere an Maschinen mit rotierenden Teilen, in und an Brennkraftmotoren, in Fortbewegungsmitteln, wie Kraftfahrzeugen, Flugzeugen, Schiffen, schienengebundenen Fahrzeugen, Raketen und Raumfahrzeugen, etc. auftreten.

Nachstehend wird ein Ausführungsbeispiel der erfindungsgemäßen Vorrichtung anhand der Zeichnung näher erläutert.

Die einzige Figur der Zeichnung zeigt einen Axialschnitt einer erfindungsgemäßen Vorrichtung mit einem piezoelektrischen Umformer.

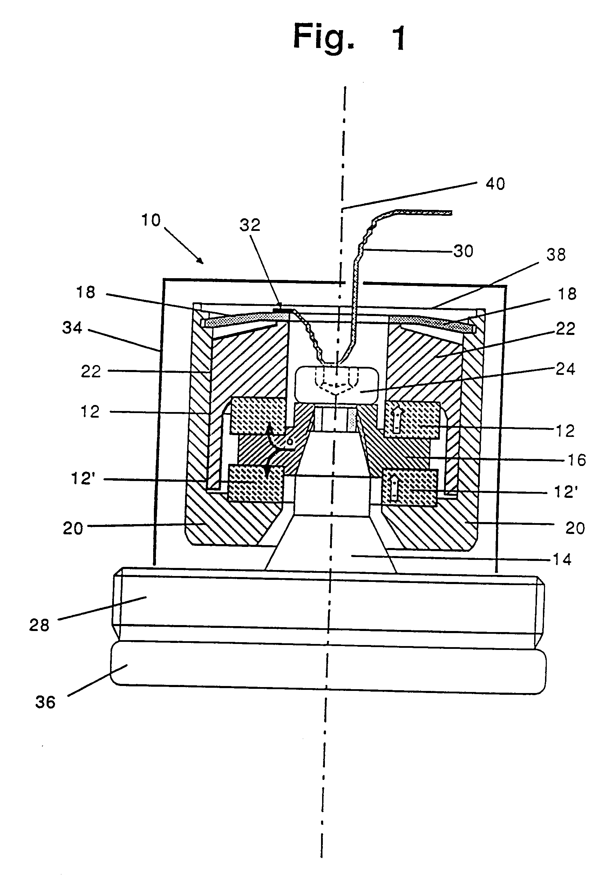

Der in der Zeichnung gezeigte Beschleunigungsmesser 10 besitzt eine insgesamt zylindrische Basis 28. Auf dieser Basis 28 befindet sich eine Trägeranordnung 14 mit einer zur Basis 28 senkrechten, strichpunktiert dargestellten Hauptachse, die gleichzeitig die Mittelachse und Symmetrieachse der Trägeranordnung bildet und sich parallel zur Beschleunigungsmeßrichtung erstreckt, sowie mit einem senkrecht zur Beschleunigungsmeßrichtung ausgerichteten scheibenförmigen Querträger oder Querstück 16, auf dessen Ober- und Unterseite je ein scheibenförmiges Piezoelement 12, 12′ angeordnet ist. Die für die Piezoelemente vorgesehenenen Halteflächen auf der Ober- und Unterseite des scheibenförmigen Querträgers 16 stehen im wesentlichen senkrecht zur Richtung der zu messenden Beschleunigung. Die Trägeranordnung 14,16 besteht aus elektrisch leitendem VA-Stahl. Die scheibenförmigen Piezoelemente 12,12′ auf bzw. unter dem Querstück 16 sind bezüglich der Beschleunigungsmeßrichtung gleich polarisiert; die Polarisation der Piezoelemente ist in Fig. 1 durch mit Vorzeichen versehene offene Pfeile angedeutet. Ein eventueller Wärmefluß **Q** (durch gekrümmte schwarze Pfeile angedeutet) von der Trägeranordnung 14,16 durch die Piezoelemente 12,12′ hindurch auf die seismische Masse bzw. deren Teile 20,22 erfolgt also einmal in und einmal entgegen der Polarisationsrichtung der Piezoelemente 12,12′. Die obere Oberfläche des Piezoelements 12 und die untere Oberfläche des Piezoelements 12′ sind mit Teilen 20,22 der seismischen Masse, die gleiche spezifische Wärmekapazität haben, wärme-und elektrisch leitend miteinander verbunden. Die Teile 20,22 der seismischen Masse bestehen aus Messinglegierung. Die einander entgegengesetzten pyroelektrischen Effekte am oberen 12 und unteren 12′ Piezoelelment heben sich daher auf. Bei einer Beschleunigung in Meßrichtung hingegen treten bezüglich der Trägeranordnung 14,16 und der Teile 20,22 der seismischen Masse gleichgerichtete Spannungen bzw. Ladungsverschiebungen auf. Das aufgesteckte Querstück 16 ist mit dem zur Basis 28 senkrechten, konisch zulaufenden Trägerteil 14 über eine Schraube 24 am Konus fest verbunden. Die scheibenförmigen Piezoelemente 12,12′ und die Massenteile 20,22 sind auf die Trägeranordnung aufgesteckt und werden mit Hilfe einer Tellerfeder 18 gegeneinander zusammengehalten. Die vorgenannte Anordnung wird durch eine Abdeckung 38 auf der Massenanordnung und ein Gehäuse 34 vor äußeren Einflüssen geschützt. Der erste elektrische Kontakt 32 für den Abgriff des piezoelektrischen Effekts befindet sich auf der Tellerfeder 18. Die Anschlußleitung 30 zum Kontakt 32 wird nach zugentlastender Befestigung an der Schraube 24 über eine Öffnung in der Abdeckung 38 und dem Gehäuse 34 nach außen geführt. Der zweite Kontakt (nicht dargestellt) befindet sich an der elektrisch leitenden Trägeranordnung 14,16 bzw. an der damit verbundenen Basis 28. Unter der Basis 28 befindet sich eine erweiterte Basis 36 zur Befestigung an dem Prüfling.

## Patentansprüche

1. Vorrichtung zum Messen der Beschleunigung eines Prüflings mittels piezoelektrischer Umformer, die einen starr mit dem Prüfling verbindbaren Träger (14,16) mit einer sich in Richtung parallel zu der Richtung der zu messenden Beschleunigung erstreckenden Hauptachse (40), eine gegenüber dem Träger (14,16) beweglich gehaltene seismische Mass (20,22) und mit dem Träger (14,16) und der seismischen Masse (20,22) für eine Anregung gekoppelte, paarweise zusammenarbeitende Piezoelemente (12,12′) aufweist, wobei die elektrische Verschaltung der Piezoelemente (12,12′) untereinander und mit dem Signalausgang, die Beaufschlagung der Piezoelement (12,12′) den Beschleunigungskräften der seismischen Masse (20,22) und die Polarität der Piezoelemente (12,12′) bezüglich der seismischen Masse (20,22) so eingerichtet sind, daß zum Signalausgang hin die durch Wärmefluß vom Träger (14,16) durch die Piezoelemente (12,12′) hindurch zu der seimischen Masse (20,22) hin hervorgerufenen pyroelektrischen Effekte sich kompensieren und die durch die zu messende Beschleunigung hervorgerufenen piezoelektrischen Effekte sich verstärken, **dadurch gekennzeichnet,** daß der Träger (14,16) ein sich quer zur Richtung der Hauptachse erstreckendes Querstück (16) aufweist und daß die Piezoelemente (12,12′) eines jeden zusammenarbeitenden Paares zur Kompressionsanregung in Richtung der Hauptachse auf bezüglich dieser Richtung entgegengesetzten Seiten des Querstücks 16 zwischen dieses und je ein Teil (20,22) der seismischen Masse so eingebaut sind, daß sie bezogen auf das Querstück (16) entgegengesetzte Polarität haben.

2. Vorrichtung nach Anspruch 1, **dadurch gekennzeichnet**, daß der Träger (14,16) starr mit einer Basis (28, 36) verbunden ist, die eine zu der Hauptachse (40) des Trägers (14,16) senkrechte, diese umgebende Kontaktfläche zum Ansetzen an den Prüfling aufweist.

3. Vorrichtung nach Anspruch 1 oder 2, **dadurch gekenn****zeichnet**, daß der Träger (14,16) T-förmig oder pilzförmig ist.

4. Vorrichtung nach einem oder mehreren der Ansprüche 1 bis 3, **dadurch gekennzeichnet,** daß die an den beiden Piezoelementen (12,12′) eines Paares angekoppelten Teile (20,22) der seismischen Masse im wesentlichen die gleiche Wärmekapazität und/oder die gleiche spezifische Wärmekapazität und/oder die gleiche Wärmeleitfähigkeit besitzen.

5. Vorrichtung nach einem oder mehreren der Ansprüche 1 bis 4, **dadurch gekennzeichnet**, daß die an den beiden Piezoelementen (12,12′) eines Paares angekoppelten Teile (20,22) der seismischen Masse wärme- und/oder elektrisch leitend miteinander verbunden sind.

6. Vorrichtung nach einem oder mehreren der Ansprüche 1 bis 5, **dadurch gekennzeichnet,** daß die seismische Masse (20,22) aus einem Stück geformt ist.

7. Vorrichtung nach einem oder mehreren der Ansprüche 1 bis 5, **dadurch gekennzeichnet,** daß die seismische Masse (20,22) aus einzelnen, den Piezoelementen (12,12′) jeweils zugeordneten Teilen (20,22) besteht.

8. Vorrichtung nach einem oder mehreren der Ansprüche 1 bis 7, **dadurch gekennzeichnet,** daß die Piezoelemente (12,12′) scheibenförmig sind.

9. Vorrichtung nach einem oder mehreren der Ansprüche 1 bis 8, **dadurch gekennzeichnet**, daß die Anordnung aus dem Träger (14,16), den Piezoelementen (12,12′) und der seismischen Masse (20,22) im wesentlichen punktsymmetrisch und/oder spiegelsymmetrisch ist.

10. Verwendung der Vorrichtung nach einem der Ansprüche 1 bis 9 zum Messen von Schwingungen und Erschütterungen.

11. Verwendung der Vorrichtung nach einem der Ansprüche 1 bis 9 zum Messen von Beschleunigungen im Erdreich, an Hoch- und Tiefbaukonstruktionen, an Maschinen, insbesondere an Maschinen mit rotierenden Teilen, in und an Brennkraftmotoren, in Fortbewegungsmitteln wie Kraftfahrzeugen, Flugzeugen, Schiffen, schienengebundenen Fahrzeugen, Raketen und Raumfahrzeugen.

## Claims

1. Device for measuring the acceleration of a test piece by means of a piezo-electric transducer, which device displays a carrier (14, 16), which is rigidly connectable with the test piece, with a main axis (40) extending in a direction parallel to the direction of the acceleration to be measured, a seismic mass (20, 22) retained to be movable relative to the carrier (14, 16) and piezo-electric elements (12, 12′), which co-operate in pairs and are coupled with the carrier (14, 16) and the seismic mass (20, 22) for an excitation, wherein the electric wiring of the piezo-electric elements (12, 12′) one among the other and with the signal output, the loading of the piezo-electric elements (12, 12′) by the acceleration forces of the seismic mass (20, 22) and the polarity of the piezo-electric elements (12, 12′) with respect to the seismic mass (20, 22) are so arranged that the pyro-electric effects, which are caused by heat flow from the carrier (14, 16) through the piezo-electric elements (12, 12′) to the seismic mass (20, 22), compensate themselves towards the signal output and the piezo-electric effects, which are caused by the acceleration to be measured, are reinforced, characterised thereby, that the carrier (14, 16) displays a transverse member (16) extending transversely to the direction of the main axis and that the piezo-electric elements (12, 12′) of each co-operating pair are - for the excitation of compression in the direction of the main axis - so installed on sides of the transverse member (16), which are opposite with respect to this direction, between the transverse member (16) and a respective part (20, 22) of the seismic mass that they have opposite polarity with respect to the transverse member (16).

2. Device according to claim 1, characterised thereby, that the carrier (14, 16) is rigidly connected with a base (28, 36), which displays a contact surface, which is perpendicular to the main axis (40) of the carrier (14, 16) and surrounds this, for placing against the test piece.

3. Device according to claim 1 or 2, characterised thereby, that the carrier (14, 16) is T-shaped or mushroom-shaped.

4. Device according to one or more of the claims 1 to 3, characterised thereby, that the parts (20, 22) of the seismic mass, which are coupled to both the piezo-electric elements (12, 12′) of a pair, have substantially equal thermal capacitance and/or equal specific thermal capacitance and/or equal thermal conductance.

5. Device according to one or more of the claims 1 to 4, characterised thereby, that the parts (20, 22) of the seismic mass, which are coupled to both the piezo-electric elements (12, 12′) of a pair, are connected together in thermally and/or electrically conductive manner.

6. Device according to one or more of the claims 1 to 5, characterised thereby, that the seismic mass (20, 22) is formed out of one piece.

7. Device according to one or more of the claims 1 to 5, characterised thereby, that the seismic mass (20, 22) consists of individual parts (20, 22) respectively associated with the piezoelectric elements (12, 12′).

8. Device according to one or more of the claims 1 to 7, characterised thereby, that the piezo-electric elements (12, 12′) are disc-shaped.

9. Device according to one or more of the claims 1 to 8, characterised thereby, that the arrangement of the carrier (14, 16), the piezo-electric elements (12, 12′) and the seismic mass (20, 22) is substantially of radial or specular symmetry.

10. Use of the device according to one of the claims 1 to 9 for the measurement of vibrations and shocks.

11. Use of the device according to one of the claims 1 to 9 for the measurement of accelerations in the soil, at constructions above and below ground, at machines, in particular at machines with rotating parts, in or at internal combustion engines, and in propulsion means such as motor vehicles, aircraft, ships, railbound vehicles, rockets and spacecraft.

## Revendications

1. Dispositif destiné à la mesure de l'accélération d'un objet d'essai au moyen de transducteurs piézoélectriques, et comprenant un support (14, 16) susceptible d'être relié de façon rigide à l'objet d'essai et comportant un axe principal (40) qui s'étend dans une direction parallèle à la direction de l'accélération qu'il s'agit de mesurer, une masselotte sismique (20, 22) maintenue de façon mobile par rapport au support (14, 16) et des éléments piézoélectriques (12, 12′) coopérant par paire, couplés, en vue d'être sollicités, au support (14, 16) et à la masselotte sismique (20, 22), le branchement électrique des éléments piézoélectriques (12, 12′) entre eux et avec la sortie du signal, la sollicitation des éléments piézoélectriques (12, 12′) par les forces d'accélération de la masselotte sismique (20, 22), et la polarité des éléments piézoélectriques (12, 12′) par rapport à la masselotte sismique (20, 22) étant agencés en vue de la sortie du signal de façon telle que les effets pyroélectriques provoqués par le flux de chaleur partant du support (14, 16) transitant par les éléments piézoélectriques (12, 12′) et parvenant à la masselotte sismique (20, 22) se compensent et que les effets piézoélectriques provoqués par l'accélération qu'il s'agit de mesurer se renforcent, caractérisé par le fait que le support (14, 16) comporte une pièce transversale (16) qui s'étend transversalement a la direction de l'axe principal et que les éléments piézoélectriques (12, 12′) de chacune des paires qui coopèrent sont montés en vue d'être sollicités en compression dans la direction de l'axe principal sur les côtés de la pièce transversale (16) qui sont opposés par rapport à cette direction entre celle-ci et chacune des parties (20, 22) de la masselotte sismique de façon telle qu'ils présentent des polarités opposées par rapport à la pièce transversale (16).

2. Dispositif selon la revendication 1, caractérisé par le fait que le support (14, 16) est relié de façon rigide à une base (28, 36) qui présente une surface de contact perpendiculaire à l'axe principal (40) du support (14, 16), entourant celui-ci, destinée à être posée sur l'objet d'essai.

3. Dispositif selon la revendication 1 ou 2, caractérisé par le fait que le support (14, 16) a une forme en ou une forme en champignon.

4. Dispositif selon une ou plusieurs des revendications 1 à 3, caractérisé par le fait que les pièces (20, 22) de la masselotte sismique couplées aux éléments piézoélectriques (12, 12′) d'une paire ont sensiblement la même capacité calorifique et/ou la même capacité calorifique spécifique et/ou la même conductibilité thermique.

5. Dispositif selon une ou plusieurs des revendications précédentes, caractérisé par le fait que les pièces (20, 22) de la masselotte sismique couplées aux deux éléments piézoélectriques (12, 12′) d'une paire sont reliés entre elles de façon calorifiquement et/ou électriquement conductrice.

6. Dispositif selon une ou plusieurs des revendications 1 à 5, caractérisé par le fait que la masselotte sismique (20, 22) est formée d'une seule pièce.

7. Dispositif selon une ou plusieurs des revendications 1 à 5, caractérisé par le fait que la masselotte sismique est constituée de pièces (20, 22) distinctes affectées chacune aux éléments piézoélectriques (12, 12′).

8. Dispositif selon une ou plusieurs des revendications 1 à 7, caractérisé par le fait que les éléments piézoélectriques (12, 12′) sont en forme de disque.

9. Dispositif selon une ou plusieurs des revendications 1 à 8, caractérisé par le fait que l'ensemble que forment le support (14, 16), les éléments piézoélectriques (12, 12′) et la masselotte sismique (20, 22) est sensiblement symétrique par rapport à un point et/ou symétrique par rapport à un plan.

10. Utilisation du dispositif selon l'une des revendications 1 à 9 pour la mesure de vibrations et de chocs.

11. Utilisation selon l'une des revendications 1 à 9 pour la mesure d'accélération dans le sol, dans des constructions en surface ou en sous-sol, dans des machines, en particulier des machines comportant des pièces en rotation, dans et sur des moteurs à combustion interne, dans des moyens de déplacement tels que les véhicules automobiles, les avions, les navires, les véhicules sur rails, les fusées et les véhicules spatiaux.
